# EUROPÄISCHE PATENTSCHRIFT

(11) **EP 1 423 476 B1**
(45) Veröffentlichungstag und Bekanntmachung des Hinweises auf die Patenterteilung: **21.03.2007**
(21) Anmeldenummer: 02796265.3
(22) Anmeldetag: 22.08.2002
(51) Int. Cl.: C08L 101/00, C08L 67/02, C08K 5/11

(54) **POLYESTER WEICHMACHER FÜR POLYVINYLCHLORID, POLYVINYLBUTYRAL ODER POLYSULFID**
PLASTICIZER FOR PLASTICS
PLASTIFIANT POUR MATIERES PLASTIQUES

(30) Priorität: 23.08.2001 DE 10141250
(43) Veröffentlichungstag der Anmeldung: 02.06.2004
(73) Patentinhaber: BASF Aktiengesellschaft, 67056 Ludwigshafen (DE)
(72) Erfinder: BREITSCHEIDEL, Boris, 67117 Limburgerhof (DE); SCHÄFER, Thomas, 68165 Mannheim (DE)
(74) Vertreter: Isenbruck, Günter
(86) Internationale Anmeldenummer: PCT/EP2002/009399
(87) Internationale Veröffentlichungsnummer: WO 2003/018686

(56) Entgegenhaltungen:
- DE-A- 1 645 554
- GB-A- 737 929
- US-A- 2 838 428

## Beschreibung

Die vorliegende Erfindung betrifft ein Gemisch umfassend mindestens einen Kunststoff A, insbesondere Polyvinylchlorid (PVC), Polyvinylbutyral (PVB) oder ein Polysulfid, und mindestens einen Polyester B, der herstellbar ist aus einer Dicarbonsäure I, mindestens einem Diol II ausgewählt aus der Gruppe bestehend aus 1,2-Propandiol, 1,3-Butandiol und 1,4-Butandiol und einer Monocarbonsäure III.

Aus der DE 10128391.1 ist bekannt, dass Dicarbonsäurediester aus einer Dicarbonsäure und einem Alkylenglykolinonoether als Weichmacher für Polyvinylbutyral oder ein Polysulfid eingesetzt werden können. Als Weichmacher für Polyvinylchlorid oder Polyvinylacetale, insbesondere Polyvinylbutyral, werden, wie beispielsweise in der DE 10116812.8 beschrieben, auch Cyclohexanpolycarbonsäuren oder Derivate davon eingesetzt.

Neben monomeren Cyclohexanpolycarbonsäureestern, Phthalsäure- und Adipinsäureestern finden ebenfalls verschiedene Polyester als Weichmacher für Kunststoffe Verwendung. Polyester-Weichmacher werden im allgemeinen hergestellt durch Veresterung von mehrwertigen Alkoholen mit einer Polycarbonsäure. Optional können endständige Alkoholgruppen bei Synthesen mit Alkoholüberschuss mit Monocarbonsäuren bzw. endständige Säuregruppen bei Synthesen mit Säureüberschuss mit einwertigen Alkoholen abgeschlossen werden.

Polyester-Weichmacher werden vor allem bei der Herstellung von Folien, Beschichtungen, Profilen, Bodenbelägen und Kabeln auf Weich-PVC-Basis eingesetzt, wenn erhöhte Anforderungen an die Extraktionsbeständigkeit, vor allem gegenüber Benzin, Ölen und Fetten, die UV-Beständigkeit und die Flüchtigkeit des Weichmachers gestellt werden.

In GB 1 173 323 werden Polyester-Weichmacher auf Basis von Adipinsäure und 1,3-Butandiol beschrieben, deren endständige Säuregruppen mit 2-Ethylhexanol, Isodecanol oder Isohexanol abgeschlossen sind. Die Polyester sollen als Weichmacher für PVC geeignet sein und sich insbesondere durch eine hohe Extrakrtionsbeständigkeit gegenüber Hexan, Kerosin, alkalischen Lösungen und Seifenwasser auszeichnen.

In US 5 281 647 werden Polyester-Weichmacher beschrieben, die durch Veresterung von Adipinsäure, Trimethylpentandiol und Propylenglykol hergestellt werden und deren endständige Säuregruppen mit 2-Ethylhexanol abgeschlossen sind. Die Polyester sollen als Weichmacher für PVC und Kautschuk geeignet sein und sich durch eine hohe Extraktionsbeständigkeit gegenüber Ölen und Seifenwasser auszeichnen.

In RO 104 737 werden Polyester-Weichmacher auf Basis von Adipinsäure und Propylenglykol beschrieben, deren endständige Säuregruppen mit 2-Ethylhexanol abgeschlossen sind. Die Polyester sollen als Weichmacher für PVC geeignet sein und sich insbesondere durch eine gute Lagerstabilität auszeichnen.

Die Nachteile der in GB 1 173 323, US 5 281 647 und RO 104 737 beschriebenen Polyester-Weichmacher bestehen darin, dass sie zum einen keine ausreichend gute Verträglichkeit mit Kunststoffen, insbesondere mit PVC, PVB und Polysulfid, besitzen, d. h. sie schwitzen in erheblichem Umfang während des Gebrauchs aus und führen somit zu einem partiellen Verlust der elastischen Eigenschaften der unter Verwendung der Polyester-Weichmacher hergestellten Kunststoffartikel. Zum anderen zeigen sie keine ausreichenden kälteelastischen Eigenschaften, weshalb der Einsatz der mit diesen Weichmachern hergestellten Kunststoffartikel im Außenbereich limitiert ist.

GB-A 737 929 betrifft Celluloseether, Celluloseester und Vinylhomo- und Copolymere, die als Weichmacher flüssige Polycarbonsäureester enthalten. Die flüssigen Carbonsäureester sind aufgebaut aus Dicarbonsäuren, 1,4-Butandiol oder 1,6-Hexandiol sowie aus Monocarbonsäuren mit aus 2 bis 8 Kohlenstoffatomen aufgebauten Kettenendgruppen. GB-A 737 929 enthält zahlreiche Beispiele, worin zahlreiche verschiedene Dicarbonsäuren, Diole und Monocarbonsäuren in unterschiedlichen Mengen miteinander umgesetzt werden.

Der vorliegenden Erfindung lag daher die primäre Aufgabe zugrunde, Gemische umfassend Polyvinylbutyral (PVB) oder ein Polysulfid, und Substanzen bereitzustellen, die aufgrund ihrer physikalischen und stofflichen Eigenschaften für eine Verwendung als Weichmacher in Polyvinylbutyral oder Polysulfid geeignet sind, und sich durch gute Verträglichkeit auszeichnen und bei den mit diesen Weichmachern hergestellten Kunststoffartikeln zu guten kälteelastischen Eigenschaften führen.

Erfindungsgemäß wird diese Aufgabe gelöst durch Gemische umfassend mindestens einen Kunststoff A ausgewählt aus der Gruppe bestehend aus Polyvinylbutyral und Polysulfid und mindestens einen Polyester B, wobei der Polyester B herstellbar ist aus 35 bis 50 mol-% einer Dicarbonsäure I, 5 bis 50 mol-% mindestens eines Diols II ausgewählt aus der Gruppe bestehend aus 1,2-Propandiol, 1,3-Butandiol und 1,4-Butandiol und 2 bis 20 mol-% Essigsäure als Monocarbonsäure m, wobei die Summe der mol-% 100 mol-% ergibt.

Unter einem Polyester B, der herstellbar ist aus einer Dicarbonsäure I, mindestens einem Diol II ausgewählt aus der Gruppe bestehend aus 1,2-Propandiol, 1,3-Butandiol und 1,4-Butandiol und einer Monocarbonsäure III, wird im Rahmen der vorliegenden Erfindung insbesondere verstanden, dass eine Dicarbonsäure I durch Esterbildung mit mindestens einem Diol II ausgewählt aus der Gruppe bestehend aus 1,2-Propandiol, 1,3-Butandiol und 1,4-Butandiol verknüpft wird, und dass die nicht mit der Dicarbonsäure verknüpften endständigen Hydroxylgruppen des Diols mit einer Monocarbonsäure verestert sind.

Dabei kann erfindungsgemäß für die Herstellung des Polyesters B ein Diol II ausgewählt aus der Gruppe bestehend aus 1,2-Propandiol, 1,3-Butandiol und 1,4-Butandiol alleine oder ein Gemisch aus zwei oder mehr davon oder ein Gemisch aus einem Diol II ausgewählt aus der Gruppe bestehend aus 1,2-Propandiol, 1,3-Butandiol und 1,4-Butandiol mit einem oder mehreren weiteren Diolen eingesetzt werden.

Besonders geeignete Dicarbonsäuren I zum Aufbau des Polyesters B sind erfindungsgemäß aliphatische Dicarbonsäuren, bevorzugt aliphatische Dicarbonsäuren mit 4 bis 9 C-Atomen, beispielsweise Adipinsäure.

In einer bevorzugten Ausführungsform betrifft die vorliegende Erfindung daher Gemische umfassend mindestens einen Kunststoff A und mindestens einen Polyester B, wobei die Dicarbonsäure I eine aliphatische Dicarbonsäure mit 4 bis 9 C-Atomen, bevorzugt Adipinsäure, ist.

Weitere Diole, die neben dem mindestens einem Diol II ausgewählt aus der Gruppe bestehend aus 1,2-Propandiol, 1,3-Butandiol und 1,4-Butandiol zum Aufbau des erfindungsgemäßen Polyesters B geeignet sind, sind beispielsweise 1,2-Ethandiol, 1,3-Propandiol, 1,2-Butandiol, 1,2-Pentandiol, 1,3-Pentandiol, 2-Methyl-1,3-Pentandiol, 1,4-Pentandiol, 1,5-Pentandiol, Neopentylglykol, 1,2-Hexandiol, 1,3-Hexandiol, 1,4-Hexandiol, 1,5-Hexandiol, 1,6-Hexandiol, Diethylenglykol, Triethylenglykol, Hydroxypivalinsäuremononeopentylglykol-ester oder Gemische dieser Diole.

Im Rahmen der vorliegenden Erfindung ist die Monocarbonsäure III Essigsäure.

Die erfindungsgemäßen Polyester-Weichmacher werden in technisch an sich bekannter Weise durch Veresterung der Dicarbonsäure I mit mindestens einem Diol II aus der Gruppe bestehend aus 1,2-Propandiol, 1,3-Butandiol und 1,4-Butandiol und gegebenenfalls weiteren Diolen in Gegenwart von einer Monocarbonsäure III als Abschlußgruppen hergestellt. Die Kettenlänge bzw. das mittlere Molgewicht der Polyester-Weichmacher wird über die Zugabe an Monocarbonsäure III gesteuert.

In einer bevorzugten Ausführungsform werden beispielsweise Adipinsäure und mindestens ein Diol aus der Gruppe 1,2-Propandiol, 1,3-Butandiol und 1,4-Butandiol und gegebenenfalls weitere Diole, Essigsäure sowie Veresterungskatalysatoren, beispielsweise Dialkyltitanate, Methansulfonsäure oder Schwefelsäure, bevorzugt Isopropylbutyltitanat, in einem Reaktionskessel vorgelegt, zunächst auf 100 °C bis 140 °C erwärmt und mittels Rühren homogenisiert. Das Reaktionsgemisch wird dann bei Normaldruck auf 160 °C bis 190 °C erwärmt. Die Veresterung unter Wasserabspaltung setzt bei ca. 150 °C ein. Das gebildete Reaktionswasser wird destillativ über eine Kollonne abgetrennt. Anschließend wird das Reaktionsgemisch weiter auf 200 °C bis 250 °C erwärmt, ein Vakuum von 150 mbar bis 300 mbar angelegt und mittels Durchleiten von Stickstoff weiteres Reaktionswasser aus dem Reaktionsgemisch entfernt. Das Reaktionsgemisch wird so lange unter Vakuum und Durchleiten von Stickstoff bei 200 °C bis 250 °C gerührt, bis die Säurezahl des Reaktionsgemisches einen Wert von < 15 mg KOH/g erreicht hat.

Anschließend wird das Reaktionsgemisch zur Veresterung der freien Hydroxylgruppen bevorzugt in einen zweiten Kessel gepumpt und so lange bei 200 °C bis 250 °C, einem Vakuum von 10 mbar bis 150 mbar und unter Entfernung von Restwasser mittels Durchleiten eines erhöhten Stickstoffstroms gerührt, bis die Säurezahl des Reaktionsgemisches einen Wert von < 1,0 mg KOH/g erreicht hat Danach wird das Reaktionsprodukt vorzugsweise noch bei 100 °C bis 140 °C filtriert.

Die erfindungsgemäß verwendeten Polyester B bestehen aus 35 bis 50 mol-% Dicarbonsäure I, insbesondere Adipinsäure, bevorzugt 40 bis 48 mol-%, besonders bevorzugt 42 bis 46 mol-%, 5 bis 50 mol-% mindestens eines Diols II aus der Gruppe bestehend aus 1,2-Propandiol, 1,3-Butandiol und 1,4-Butandiol, bevorzugt 10 bis 49 mol-%, besonders bevorzugt 20 bis 48 mol-%, sowie 2 bis 20 mol-% Essigsäure als Monocarbonsäure III, bevorzugt 5 bis 15 mol-%, besonders bevorzugt 6 bis 10 mol-%, wobei die Summe der mol-% immer 100 mol-% ergeben muss.

Die erfindungsgemäß verwendeten Polyester B besitzen eine Dichte von 1,00 bis 1,30 g/cm³, bevorzugt von 1,10 bis 1,20 g/cm³, besonders bevorzugt von 1,12 bis 1,16 g/cm³, eine Viskosität von 500 bis 20000 mPa*s, bevorzugt von 1500 bis 15000 mPa*s, besonders bevorzugt von 2000 bis 12000 mPa*s, einen Brechungsindex n_{D}²⁰ von 1,450 bis 1,490, bevorzugt von 1,455 bis 1,480, besonders bevorzugt von 1,460 bis 1,475, und eine mittlere Molmasse (Zahlenmittel), bestimmt mittels GPC, von 500 bis 15000, bevorzugt von 1000 bis 10000, besonders bevorzugt von 2000 bis 8000.

Im Rahmen der vorliegenden Erfindung liegt der Gehalt an mindestens einem Polyester B der Gemische beispielsweise bei 1 bis 50 Gew.-%, vorzugsweise bei 5 bis 40 Gew.-%, insbesondere bei 10 bis 30 Gew.-%, jeweils bezogen auf die Summe aller Komponenten.

Die erfindungsgemäß verwendeten Polyester eignen sich als Weichmacher für PVB und Polysulfid. Sie sind mit PVB und Polysulfid, sehr gut verträglich und bewirken bei den mit diesen Weichmachern hergestellten Kunststoffartikeln sehr gute kälteelastische Eigenschaften.

Im Rahmen der vorliegenden Erfindung wird unter einem Weichmacher eine Substanz verstanden, die die Härte eines Kunststoffs, insbesondere von Polyvinylbutyral oder eines Polysulfids, im erfindungsgemäßen Gemisch herabsetzt.

Die Verträglichkeit eines Weichmachers in einem Kunststoff wird bestimmt, indem der weichgemachte Kunststoff bei einer Temperatur von 70 °C und 100 % relativer Luftfeuchtigkeit über einen längeren Zeitraum gelagert und der Gewichtsverlust infolge Ausschwitzen des Weichmachers nach bestimmten Zeitintervallen durch Auswiegen ermittelt wird.

Als Kunststoffe für die erfindungsgemäßen Gemische haben sich Polyvinylbutyral und Polysulfide erwiesen. Daher betrifft die vorliegende Erfindung in einer bevorzugten Ausführungsform Gemische umfassend mindestens einen Kunststoff A und mindestens einen Polyester B, wobei der Kunststoff A ausgewählt ist aus der Gruppe bestehend aus Polyvinylbutyral und Polysulfid.

Die vorliegende Erfindung betrifft daher auch die Verwendung eines Polyesters B, herstellbar aus 35 bis 50 mol-% einer Dicarbonsäure I, 5 bis 50 mol-% mindestens eines Diols II ausgewählt aus der Gruppe bestehend aus 1,2-Propandiol, 1,3-Butandiol und 1,4-Butandiol und 2 bis 20 mol-% Essigsäure als Monocarbonsäure III als Weichmacher für Polyvinylbutyral oder Polysulfid.

Im folgenden sollen die bevorzugt in dem erfindungsgemäßen Gemisch enthaltenen Kunststoffe A näher beschrieben werden.

Polyvinylacetale werden aus Polyvinylalkohol durch Umsatz mit Aldehyden erhalten. Neben cyclischen Acetalgruppen können die Polyvinylacetale auch Hydroxy- und Acetatgruppen aufweisen. Polyvinylbutyral wird beispielsweise durch Umsetzung einer Lösung von Polyvinylalkohol in Wasser mit Butyraldehyd und Säure hergestellt. Das entstehende PVB fällt bei diesem Verfahren aus der Lösung aus.

Insbesondere wird Polyvinylbutyral in einem dreistufigen Prozeß über Polyvinylalkohol, ausgehend von Acetylen und Essigsäure für die Herstellung von Vinylacetat als Monomer hergestellt. Da Vinylalkohol als freie Verbindung unbeständig ist und nicht zur Polymerisation zur Verfügung steht, erfolgt eine Umsetzung des Polyvinylacetats durch Hydrolyse in Gegenwart von Methanol zu Polyvinylalkohol. Durch Acetalisierung des Polyvinylalkohols mit Butyraldehyd in saurem Medium entsteht Polyvinylbutyral. Varianten des PVB-Harzes werden beispielsweise durch die Wahl des Molekulargewichts vom Ausgangs-Polyvinylacetat, durch den Grad der Hydrolyse zu Polyvinylalkohol und durch die Menge des für die Acetalisierung eingesetzten Butyraldehyds erzielt. Dementsprechend kann PVB auch als ein Terpolymeres aus Vinylacetat, Vinylalkohol und Vinylbutyral aufgefaßt werden.

Die Eigenschaften von PVB werden in erster Linie durch den Anteil an freien Hydroxylgruppen bestimmt, der durch den Grad der Hydrolyse des Polyvinylacetats zu Polyvinylalkohol und durch die Menge des bei der Acetalisierung eingesetzten Butyraldehyds bestimmt wird. Der Anteil an freien Hydroxylgruppen beträgt im Allgemeinen 5 bis 50%, bevorzugt 10 bis 40% und besonders bevorzugt 15 bis 25%.

In Abhängigkeit von der Art und der Verteilung der cyclischen Acetalgruppen, der Hydroyx- und Acetatgruppen liegt die Erweichungstemperatur des PVB bei 80 bis 150°C, insbesondere bei 90 bis 140°C.

Polyvinylbutyral wird insbesondere zur Herstellung von Folien eingesetzt. PVB-Folien haben typischerweise eine Dicke von 0,1 bis 2 mm, insbesondere von 0,4 bis 1,5 mm

Unter einem Polysulfid wird im Rahmen der vorliegenden Erfindung ein Polymer verstanden, das Thioether-Gruppen aufweist. Die Polysulfide können linear oder verzweigt aufgebaut sein oder auch vemetzt sein. Neben den Thioether-Gruppen können die erfindungsgemäß eingesetzten Polysulfide auch noch weitere funktionelle Gruppen in der Haupt- oder in Seitenketten aufweisen. Im Rahmen der vorliegenden Erfindung können die erfindungsgemäßen Gemische auch zwei oder mehr verschiedene Polysulfide umfassen.

Die in den erfindungsgemäßen Gemischen enthaltenen Polysulfide können neben Thioether-Gruppen auch noch weitere funktionelle Gruppen, insbesondere Ether-Gruppen, aromatische Gruppen oder auch Urethan-Gruppen, aufweisen. Die erfindungsgemäß eingesetzten Polysulfide sind bevorzugt polymere Alkylthioether, wobei im Rahmen der vorliegenden Erfindung die Alkylgruppen linear oder verzweigt sein können.

Polysulfide werden insbesondere durch Polykondensation von Alkalipolysulfiden, beispielsweise Natriumpentasulfid, mit Alkyldihalogeniden, wie zum Beispiel 1,2-Dichlorethan und Bis(2-chlorethoxy)methan, hergestellt. Es können auch Trihalogenide, wie beispielsweise 1,2,3-Trichlorpropan, zur Vernetzung zugesetzt werden.

Die Eigenschaften der Polysulfide sind insbesondere von der Art des Alkylrests, dem Schwefelgehalt und der Molmasse, sowie der Vemetzungsdichte des Polysulfids abhängig. Vorzugsweise liegen die Molmassen der in den erfindungsgemäßen Gemischen enthaltenen Polysulfide im Bereich von 1000 bis 8000 g/mol. Die Vemetzungsdichte beeinflußt die Härte der Polysulfide, wobei die Vernetzung beispielsweise über Schwefelbrücken durch Reaktion terminaler Mercapto-Gruppen erfolgt. Erfindungsgemäß liegt die Vernetzungsdichte im Bereich von 0,01 bis 10 mol-%, vorzugsweise 0,02 bis 5 mol-%, insbesondere 0,05 bis 2 mol-%.

Im Rahmen der vorliegenden Erfindung sind die in den erfindungsgemäßen Gemischen enthaltenen Polysulfide temperaturbeständig in einem Bereich von -50 bis 125°C, insbesondere von-35 bis 100°C.

Polysulfide werden beispielsweise zur Herstellung von Dichtungsmassen, insbesondere Dichtungsmassen für Isolierglas, eingesetzt.

Im Rahmen der Erfindung liegt der Gehalt der Gemische an PVB bzw. an einem Polysulfid bei 20 bis 99 Gew.-%, bevorzugt 45 bis 95 Gew.-%, besonders bevorzugt bei 50 bis 90 Gew.-% und insbesondere bei 55 bis 85 Gew.-%, jeweils bezogen auf die Summe aller Komponenten.

Die erfindungsgemäßen Gemische können neben mindestens einem Kunststoff A und mindestens einem Polyester B auch noch andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Gemische dar, sondern dienen lediglich der Erläuterung. Alle Angaben zum Gehalt sind Gew.%-Angaben, jeweils bezogen auf die Summe aller Komponenten.

Stabilisatoren neutralisieren insbesondere die während und/oder nach der Verarbeitung von PVC abgespaltene Salzsäure.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate wie Hydrotalcit.

Die erfindungsgemäßen Gemische können einen Gehalt an Stabilisatoren von 0,05 bis 7%, bevorzugt 0,1 bis 5%, besonders bevorzugt von 0,2 bis 4% und insbesondere von 0,5 bis 3% aufweisen, jeweils bezogen auf die Summe aller Komponenten.

Gleitmittel sollen zwischen den Kunststoff-Partikeln wirksam werden und Reibungskräfte beim Mischen, Plastifizieren und Verformen entgegenwirken.

Als Gleitmittel können die erfindungsgemäßen Gemische alle für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20 C-Atomen, Ketone, Carbonsäuren, wie Fettsäuren und Monansäure, oxidiertes PE-Wachs, Metallsalze von Carbonsäuren , Carbonsäureamide sowie Carbonsäureester, beispielsweise mit den Alkoholen Ethanol, Fettalkoholen, Glycerin, Ethandiol, Pentaerythrit und langkettige Carbonsäuren als Säurekomponente.

Die erfindungsgemäßen Gemische können einen Gehalt an Gleitmittel von 0,01 bis 10%, bevorzugt 0,05 bis 5%, besonders bevorzugt von 0,1 bis 3% und insbesondere von 0,2 bis 2% aufweisen, jeweils bezogen auf die Summe aller Komponenten.

Füllstoffe beeinflussen vor allem die Druck-, Zug- und Biegefestigkeit sowie die Härte und Wärmeformbeständigkeit von weichgemachtern PVB oder Polysulfiden, in positiver Weise.

Im Rahmen der Erfindung können die Gemische auch Füllstoffe wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Gemische können einen Gehalt an Füllstoffen von 0,01 bis 80%, bevorzugt 0,1 bis 60%, besonders bevorzugt von 0,5 bis 50% und insbesondere von 1 bis 40% aufweisen, jeweils bezogen auf die Summe aller Komponenten.

Die erfindungsgemäßen Gemische können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht.

Die erfindungsgemäßen Gemische können einen Gehalt an Pigmenten von 0,01 bis 10%, bevorzugt 0,05 bis 5%, besonders bevorzugt von 0,1 bis 3% und insbesondere von 0,5 bis 2% aufweisen, jeweils bezogen auf die Summe aller Komponenten.

Um die Entflammbarkeit zu vermindern und die Rauchentwicklung beim Verbrennen zu verringern, können die erfindungsgemäßen Gemische auch Flamminhibitoren enthalten.

Als Flamminhibitoren können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden.

Die erfindungsgemäßen Gemische können einen Gehalt an Flamminhibitoren von 0,01 bis 10%, bevorzugt 0,1 bis 8%, besonders bevorzugt von 0,2 bis 5% und insbesondere von 0,5 bis 3% aufweisen, jeweils bezogen auf die Summe aller Komponenten.

Um aus dem erfindungsgemäßen Gemisch hergestellte Artikel vor einer Schädigung im Oberflächenbereich durch den Einfluß von Licht zu schützen, können die Gemische auch Lichtstabilisatoren enthalten.

Es können im Rahmen der vorliegenden Erfindung beispielsweise Hydroxybenzophenone oder Hydroxyphenylbenzotriazole eingesetzt werden.

Die erfindungsgemäßen Gemische können einen Gehalt an Lichtstabilisatoren von 0,01 bis 7%, bevorzugt 0,1 bis 5%, besonders bevorzugt von 0,2 bis 4% und insbesondere von 0,5 bis 3% aufweisen, jeweils bezogen auf die Summe aller Komponenten.

Im Rahmen der Erfindung können die erfindungsgemäßen Gemische auch weitere Kunststoffe ausgewählt aus der Gruppe bestehend aus Homo- und Copolymeren auf Basis von Ethylen, Propylen, Butadien, Vinylchlorid, Vinylacetat, Glycidylacrylat, Glycidylmethacrylat, Acrylaten und Methacrylaten mit Alkoholkomponenten von verzweigten oder unverzweigten C1 bis C10-Alkoholen, Styrol oder Acrylnitril enthalten.

Zu nennen sind beispielsweise Polyacrylate mit gleichen oder verschiedenen Alkoholresten aus der Gruppe der C4 bis C8-Alkohole, besonders des Butanols, Hexanols, Octanols und 2-Ethylhexanols, Polymethylmethacrylat, Polyvinylchlorid, Metlrylmethacrylat-Butylacrylat-Copolymere, Methylmethacrylat-Butylmethacrylat-Copolymere, EthylenVinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die erfindungsgemäßen Gemische umfassend Polyvinylbutyral oder Polysulfide können als Zusatzstoffe insbesondere auch Regulatoren für das Adhäsionsverhalten gegenüber Glas, wie beispielsweise Natrium-Salze, insbesondere Natriumacetat und Natriumlecithin, enthalten. Zur Verbesserung der Adhäsion an speziellen Substraten können insbesondere die erfindungsgemäßen Gemische umfassend mindestens ein Polysulfid als Zusatzstoffe auch Phenolharze, Epoxy- und Mercapto-funktionalisierte Silane oder Epoxy-Harze enthalten.

Die erfindungsgemäßen Gemische umfassend Polysulfide können beispielsweise auch Härtungsmittel wie Bleidioxid, Calciumperoxid, Zinkperoxid oder Mangandioxid enthalten.

Die erfindungsgemäßen Gemische eignen sich insbesondere auf Grund der hohen Verträglichkeit der Komponenten, das heißt des Kunststoffs A und des Polyesters B, für die Herstellung von weich gemachten Kunststoff-Artikeln.

Daher betrifft die vorliegende Erfindung auch die Verwendung eines Gemischs umfassend mindestens einen Kunststoff A, ausgewählt aus der Gruppe bestehend aus Polyvinylbutyral (PVB) und einem Polysulfid, und mindestens einen Polyester B, herstellbar aus 35 bis 50 mol-% einer Dicarbonsäure I, 5 bis 50 mol-% mindestens eines Diols II ausgewählt aus der Gruppe bestehend aus 1,2-Propandiol, 1,3-Butandiol und 1,4-Butandiol und 2 bis 20 mol-% Essigsäure als Monocarbonsäure III, in Gehäusen für Elektrogeräte, wie beispielsweise Küchengeräte und Computergehäuse, Rohrleitungen, Apparaten, Kabeln, Draht-Ummantelungen, Fensterprofilen, im Innenausbau, im Fahrzeug- und Möbelbau, in Bodenbelägen, medizinischen Artikeln, Lebensmittelverpackungen, Dichtungen, Dichtungsmassen, Dichtungsmassen für Isolierglas, Folien, Dachbelagsfolien, Verbundfolien, Folien für Verbundsicherheitsglas, insbesondere für den Fahrzeug-Bereich und den Architektur-Sektor, Schallplatten, Kunstleder, Spielzeug, Verpackungsbehältern, Klebebandfolien, Bekleidung, Beschichtungen, als Fasern für Gewebe.

Außerdem betrifft die Erfindung auch Gegenstände, die ein Gemisch umfassend mindestens einen Kunststoff A, ausgewählt aus der Gruppe bestehend aus Polyvinylbutyral (PVB) und einem Polysulfid, und mindestens einen Polyester B, herstellbar aus 35 bis 50 mol-% einer Dicarbonsäure I, 5 bis 50 mol-% mindestens eines Diols II ausgewählt aus der Gruppe bestehend aus 1,2-Propandiol, 1,3-Butandiol und 1,4-Butandiol und 2 bis 20 mol-% Essigsäure als Monocarbonsäure III, enthalten. Ein erfindungsgemäßer Gegenstand kann beispielsweise ein Gehäuse für Elektrogeräte, eine Rohrleitung, eine Vorrichtung, ein Kabel, eine Draht-Ummantelung, ein Fensterprofil, ein Bodenbelag, ein medizinischer Artikel, ein Spielzeug, eine Lebensmittelverpackung, eine Dichtung, eine Dichtungsmasse, eine Dichtungsmasse für Isolierglas, eine Folie, eine Dachbelagsfolien, eine Verbundfolie, eine Folie für Verbundsicherheitsglas, insbesondere für den Fahrzeug-Bereich und den Architektur-Sektor, eine Schallplatte, Kunstleder, ein Verpackungsbehälter, eine Klebebandfolie, Bekleidung, eine Beschichtung oder eine Faser für Gewebe sein.

Mit den erfindungsgemäßen Gemischen hergestellte PVB-Artikel, insbesondere PVB-Folien, zeichnen sich durch eine hohe Festigkeit, sehr gute Dehnbarkeit und hervorragende Haftung an Glasoberflächen aus. Dadurch ermöglichen sie die Herstellung von sehr flexiblen Folien mit guter Transparenz und Lichtbeständigkeit und sehr guter Glashaftung, was insbesondere für die Verwendung als Folien zur Herstellung von Verbundsicherheitsglas wichtig ist.

Die Festigkeit und Dehnbarkeit von PVB-Folien wird insbesondere durch die Shore-Härte A und D (Bestimmung nach DIN 53505), die Bruchspannung (Bestimmung nach DIN EN ISO 527, Teil 1 und 3), die Bruchdehnung (Bestimmung nach DIN EN ISO 527, Teil 1 und 3) und die Spannung bei 100% Dehnung (Bestimmung nach DIN EN ISO 527, Teil 1 und 3) bestimmt.

Beispielsweise mit den erfindungsgemäßen Gemischen hergestellte Polysulfid-Dichtungsmassen zeichnen sich neben hoher Elastizität und geringer Gasdurchlässigkeit insbesondere durch eine gute Witterungsbeständigkeit, gute Chemikalienresistenz, insbesondere Quellbeständigkeit, und gute Alterungsbeständigkeit aus.

Die Charakterisierung der kälteelastischen Eigenschaften von weichgemachten Kunststoffen erfolgt vorzugsweise mit Hilfe der Kältebruchtemperatur und der Torsionssteifheit. Unter der Kältebruchtemperatur versteht man die Temperatur, bei der ein weichgemachter Kunststoff in der Kälte bei mechanischer Belastung erste optisch sichtbare Beschädigungen aufweist. Die Bestimmung der Kältebruchtemperatur erfolgt nach DIN 53372. Unter der Torsionssteifheit versteht man die Temperatur, bei der ein weichgemachter Kunststoff bei Anwendung einer definierten Kraft um einen bestimmten Winkel verdreht werden kann. Die Bestimmung der Torsionssteifheit erfolgt nach DIN 53447.

## Patentansprüche

1. Gemisch umfassend mindestens einen Kunststoff A ausgewählt aus der Gruppe bestehend aus Polyvinylbutyral und Polysulfid und mindestens einen Polyester B, wobei der Polyester B herstellbar ist aus 35 bis 50 mol-% einer Dicarbonsäure I, 5 bis 50 mol-% mindestens einens Diols II ausgewählt aus der Gruppe bestehend aus 1,2-Propandiol, 1,3-Butandiol und 1,4-Butandiol und 2 bis 20 mol-% Essigsäure als Mocarbonsäure III, wobei die Summe der mol-% 100 mol-% ergibt.

2. Gemisch nach Anspruch 1, **dadurch gekennzeichnet, dass** die Dicarbonsäure I eine aliphatische Dicarbonsäure mit 4 bis 9 C-Atomen ist.

3. Gemisch nach einem der vorherigen Ansprüche, **dadurch gekennzeichnet, dass** die Dicarbonsäure I Adipinsäure ist.

4. Gemisch nach einem der vorherigen Ansprüche, **dadurch gekennzeichnet, dass** weitere Kunststoffe ausgewählt aus der Gruppe bestehend aus Homo- und Copolymeren auf Basis von Ethylen, Propylen, Butadien, Vinylchlorid, Vinylacetat, Glycidylacrylat, Glycidyhuethacrylat, Acrylaten und Methacrylaten mit Alkoholkomponenten von verzweigten oder unverzweigten C1 bis C10-Alkoholen, Styrol oder Acrylnitril enthalten sind.

5. Verwendung eines Gemischs nach einem der Ansprüche 1 bis 4 in Gehäusen für Elektrogeräte, Küchengeräten, Computergehäusen, in Rohrleitungen, Apparaten, Kabeln, Draht-Ummantelungen, Fensterprofilen, im Innenausbau, im Fahrzeug- und Möbelbau, in Bodenbelägen, zur Herstellung von medizinischen Artikeln, Lebensmittelverpackungen, Dichtungen, Dichtungsmassen, Dichtungsmassen für Isolierglas, Folien, Dachbelagsfolien, Verbundfolien, Schallplatten, Kunstleder. Spielzeug, Vetpackungsbehältem, Klebebandfolien, Bekleidung, Beschichtungen, als Fasern für Gewebe und als Folien für Verbundsicherheitsglas.

6. Gegenstand enthaltend ein Gemisch gemäß einem der Ansprüche 1 bis 4.

7. Gegenstand nach Anspruch 6, wobei der Gegenstand ein Gehäuse für Elektrogeräte, eine Rohrleitung, eine Vorrichtung, ein Kabel, eine Draht-Ummantelung, ein Fensterprofil, ein Bodenbelag, ein medizinischer Artikel, ein Spielzeug, eine Lebensmittelverpackung, eine Dichtung, eine Dichtungsmasse, eine Dichtungsmasse für Isolierglas, eine Folie, eine Dachbelagsfolie, eine Verbundfolie, eine Folie für Verbundsicherheitsglas, eine Schallplatte, Kunstleder, ein Verpackungsbehälter, eine Klebebandfolie, Bekleidung, eine Beschichtung oder eine Faser für Gewebe ist.

8. Verwendung eines Polyesters B, herstellbar aus 35 bis 50 mol-% einer Dicarbonsäure I, 5 bis 50 mol-% mindestens eines Diols II ausgewählt aus der Gruppe bestehend aus 1,2-Propandiol, 1,3-Butandiol und 1,4-Butandiol und 2 bis 20 mol-% Essigsäure als Monocarbonsäure III wobei die Summe der mol-% 100 mol-% ergibt, als Weichmacher für Weichmacher für Polyvinylbutyral oder Polysulfid.

## Claims

1. A mixture comprising at least one plastic A selected from the group consisting of polyvinyl butyral and polysulfide and comprising at least one polyester B, the polyester B being preparable from 35 to 50 mol% of a dicarboxylic acid I, and from 5 to 50 mol% of at least one diol II selected from the group consisting of 1,2-propanediol, 1,3-butanediol, and 1,4-butanediol, and from 20 to 20 mol% of acetic acid as monocarboxylic acid III, where the total of the mol% values is 100 mol%.

2. The mixture according to claim 1, wherein the dicarboxylic acid I is an aliphatic dicarboxylic acid having from 4 to 9 carbon atoms.

3. The mixture according to any of the preceding claims, wherein the dicarboxylic acid I is adipic acid.

4. The mixture according to any of the preceding claims, comprising other plastics selected from the group consisting of homo- and copolymers based on ethylene, propylene, butadiene, vinyl chloride, vinyl acetate, glycidyl acrylate, glycidyl methacrylate, or on acrylates or methacrylates whose alcohol components are branched or unbranched C1-C10 alcohols, styrene, or acrylonitrile.

5. The use of a mixture according to any of claims 1 to 4 in casings for electrical devices, in kitchen machines, in computer cases, in piping, chemical apparatus, cables, wire sheathing, window profiles, in interior fittings, in vehicle construction and furniture construction, in floorcoverings, for producing medical items, packaging for food or drink, gaskets, sealing compounds, including those for sealed glazing, films, including roofing films, composite films, phonographic disks, synthetic leather, toys, packaging containers, adhesive tape films, clothing, or coatings, or as fibers for fabrics, or as films for laminated safety glass.

6. An article comprising a mixture according to any of Claims 1 to 4.

7. The article according to claim 6, which is a casing for electrical devices or is piping, apparatus, a cable, wire sheathing, a window profile, a floorcovering, a medical item, a toy, packaging for food or drink, a gasket, a sealing compound, including one for sealed glazing, a film, including a roofing film, a composite film, a film for laminated safety glass, a phonographic disk, a synthetic leather, a packaging container, an adhesive tape film, clothing, or a coating, or a fiber for fabrics.

8. The use, as plasticizer for polyvinyl butyral or polysulfide, of a polyester B which is preparable from 35 to 50 mol% of a dicarboxylic acid I, and from 5 to 50 mol% of at least one diol II selected from the group consisting of 1,2-propanediol, 1,3-butanediol, and 1,4-butanediol, and from 2 to 20 mol% of acetic acid as monocarboxylic acid III, where the total of the mol% values is 100 mol%.

## Revendications

1. Mélange comportant au moins une substance synthétique A, choisie parmi le groupe constitué de polyvinylbutyral et de polysulfure, et au moins un polyester B, le polyester B pouvant être préparé à partir de 35 à 50 % molaires d'acide dicarboxylique I, de 5 à 50 % molaires d'au moins un diol II choisi parmi le groupe constitué du 1,2-propanediol, du 1,3-butanediol et du 1,4-butanediol, et de 2 à 20 % molaires d'acide acétique comme l'acide monocarboxylique III, la somme des % molaires donnant 100 % molaires.

2. Mélange suivant la revendication 1, **caractérisé en ce que** l'acide dicarboxylique I est un acide dicarboxylique aliphatique comportant 4 à 9 atomes de C.

3. Mélange suivant l'une des revendications précédentes, **caractérisé en ce que** l'acide dicarboxylique I est de l'acide adipique.

4. Mélange suivant l'une des revendications précédentes, **caractérisé en ce que** d'autres substances synthétiques choisies parmi le groupe constitué d'homopolymères et de copolymères à base d'éthylène, de propylène, de butadiène, de chlorure de vinyle, d'acétate de vinyle, d'acrylate de glycidyle, de méthacrylate de glycidyle, d'acrylates et de méthacrylates avec des composants alcool ramifiés ou non ramifiés en C1-C10, de styrène ou d'acrylonitrile sont contenues.

5. Utilisation d'un mélange suivant l'une des revendications 1 à 4, dans des boîtiers pour des appareils électriques, des ustensiles de cuisine, des boîtiers d'ordinateurs, dans des tuyauteries, des appareils, des câbles, des gainages de fil métallique, des profilés de fenêtres, dans l'aménagement intérieur, dans la construction de véhicules et de mobilier, dans des revêtements de sol, pour la préparation d'articles médicaux, des emballages alimentaires, des organes d'étanchéité, des masses d'étanchéification, des masses d'étanchéification pour du verre isolant, des feuilles, des feuilles de couverture de toit, des feuilles composites, des disques, du cuir synthétique, des jouets, des récipients d'emballage, des feuilles de bande adhésive, des revêtements, des recouvrements, sous la forme de fibres pour des tissus et sous la forme de feuilles pour du verre de sécurité composite.

6. Objet contenant un mélange suivant l'une des revendications 1 à 4.

7. Objet suivant la revendication 6, l'objet étant un boîtier pour des appareils électriques, une tuyauterie, un dispositif, un câble, un gainage de fil métallique, un profilé de fenêtre, un revêtement de sol, un article médical, un jouet, un emballage alimentaire, un organe d'étanchéité, une masse d'étanchéification, une masse d'étanchéification pour du verre isolant, une feuille, une feuille de couverture de toit, une feuille composite, une feuille pour du verre de sécurité composite, un disque, du cuir synthétique, un récipient d'emballage, une feuille de bande adhésive, un revêtement, un recouvrement ou une fibre pour du tissu.

8. Utilisation d'un polyester B, que l'on peut préparer à partir de 35 à 50 % molaires d'acide dicarboxylique I, de 5 à 50 % molaires d'au moins un diol II choisi parmi le groupe constitué du 1,2-propanediol, du 1,3-butanediol et du 1,4-butanediol, et de 2 à 20 % molaires d'acide acétique, comme l'acide monocarboxylique III, la somme des % molaires donnant 100 % molaires, comme plastifiant pour du polyvinylbutyral ou du polysuflure.
